# EUROPÄISCHE PATENTSCHRIFT

(11) **EP 1 235 133 B1**
(45) Veröffentlichungstag und Bekanntmachung des Hinweises auf die Patenterteilung: **09.04.2008**
(21) Anmeldenummer: 02004179.4
(22) Anmeldetag: 26.02.2002
(51) Int. Cl.: G05G 1/14, B60K 26/02, B60T 7/06

(54) **Pedal**
Pedal
Pédale

(30) Priorität: 26.02.2001 DE 10109211
(43) Veröffentlichungstag der Anmeldung: 28.08.2002
(73) Patentinhaber: VDO Automotive AG, 93055 Regensburg (DE)
(72) Erfinder: Wehner, Andreas, 61389 Schmitten (DE); Weis, Christian, 55120 Mainz (DE)

(56) Entgegenhaltungen:
- DE-A- 4 335 295
- GB-A- 2 332 264
- US-A- 5 839 326

## Beschreibung

Die Erfindung betrifft eine Anordnung mit einem Pedal, insbesondere für ein Kraftfahrzeug, und einem zum Pedal externen, die Schwenkbarkeit des Pedalarms begrenzenden Endanschlag wobei das Pedal einen Pedalarm aufweist, welcher an seinem ersten Endbereich von einer Kraft, insbesondere einer Fußkraft, auslenkbar und an seinem zweiten Endbereich um eine Schwenkachse schwenkbar gelagert ist, wobei an dem ersten Endbereich des Pedalarms eine mit einem Pedalanschlag fest verbundene Pedalplatte angeordnet ist.

Pedale der oben genannten Art werden heute vielfach als Fahrpedale bei Kraftfahrzeugen zur Steuerung der Geschwindigkeit eingesetzt. Hierbei lenkt beim Betrieb des Kraftfahrzeugs der Fahrer des Kraftfahrzeugs den Pedalarm des Pedals mittels Fußkraft aus, um eine bestimmte Geschwindigkeit des Kraftfahrzeugs zu erreichen. Die Auslenkung des Pedalarms ist dabei üblicherweise an eine Steuereinheit gekoppelt, über die die Geschwindigkeit des Kraftfahrzeugs einstellbar ist. Allgemein gilt: Je größer die Auslenkung des Pedalarms, desto größer die Geschwindigkeit des Kraftfahrzeugs.

Zur Steuerung der Geschwindigkeit des Kraftfahrzeugs ist das Pedal üblicherweise mechanisch oder elektronisch an eine Drosselklappe oder eine Diesel-Einspritzpumpe gekoppelt, über die die dem Motor des Kraftfahrzeugs zuzuführende Frischgasmenge bzw. Dieselmenge einstellbar ist. Bei einer mechanischen Kopplung zwischen dem Fahrpedal und der Drosselklappe bzw. der Diesel-Einspritzpumpe weist das mechanische System mit mehreren bewegten Elementen Reibung auf. Dadurch wird es dem Fahrer des Kraftfahrzeugs erleichtert, die Pedalstellung bei Relativbeschleunigungen zwischen dem Kraftfahrzeug und dem Fuß annähernd konstant zu halten, dies gilt insbesondere bei Ruck- und Stoßbewegungen, die auf Schlechtwegstrecken auftreten können. Durch die Reibung der mechanischen Elemente wird die Muskulatur des Fahrers des Kraftfahrzeugs bei längeren Fahrten mit annähernd konstanter Pedalstellung entlastet.

Bei einer elektronischen Kopplung zwischen dem Fahrpedal und der Drosselklappe bzw. der Diesel-Einspritzpumpe ist über einen in dem Fahrpedal integrierten Sollwertgeber der Drosselklappe eine bestimmte Position vorgebbar bzw. der Diesel-Einspritzpumpe eine bestimmte Dieselmenge zuweisbar. Aufgrund der fehlenden mechanischen Anbindung entfällt jedoch die bisher bei den mechanischen Systemen vorhandene mechanische Hysterese. Um nun auch bei einer elektronischen Kopplung zwischen dem Fahrpedal und dem Drosselklappenstutzen dem Fahrer das Gefühl einer Hysterese zu vermitteln, ist üblicherweise zur Erzeugung einer für den Fahrer des Kraftfahrzeugs spürbaren mechanischen Hysterese eine Reibungseinheit in das Pedal integriert.

Die Verschwenkbarkeit des Pedalarms des Pedals ist üblicherweise durch einen ersten Anschlag und einen zweiten Anschlag begrenzt. Der erste Anschlag legt dabei die Ausgangsposition des Pedalarms und der zweite Anschlag die Endstellung des Pedalarms fest. Diese beiden Anschläge können an einem Gehäuse angeordnet sein, das beispielsweise auch zur Lagerung der Schwenkachse vorgesehen ist. Die beiden Anschläge können aber auch außerhalb des Pedals angeordnet sein. Außerdem gibt es Pedale, bei denen der erste Anschlag, insbesondere der Startanschlag, mit einem beispielsweise die Schwenkachse des Pedalarms umschließenden Gehäuse gekoppelt ist und der zweite Anschlag, insbesondere der Endanschlag, außerhalb des Pedals angeordnet ist. Befindet sich der Endanschlag außerhalb des Pedals, so ist bei der Justage des Pedals der Pedalarm relativ zu dem Endanschlag zu justieren. Aufgrund der aufwendigen Justagearbeiten des Pedals relativ zu einem ersten oder zweiten externen Anschlag wird häufig darauf verzichtet, ein Pedal für einen externen Anschlag auszulegen.

Aus der DE 43 35 295 A ist ein Pedal der eingangs genannten Art bekannt, wobei die Pedalplatte auf dem als Vierkantrohr ausgebildeten Ende des Pedalarms mit einer Ausnehmung entsprechenden Querschnitts bis zur Anlage an einem Anschlag aufgeschoben und durch Umbiegen einer Lasche des Pedalarms in dieser Position fixiert wird.

Aus dem nächstliegenden Stand der Technik, der US-A-5 839 326 ist ein Pedal für Kraftfahrzeuge bekannt, das einen Pedalarm aufweist, an dessen einem Endbereich eine Pedalplatte angeordnet ist und der an seinen anderen Endbereich um eine Schwenkachse schwenkbar gelagert ist. Zur Regulierung des Drehradius der Pedalplatte ist die Pedalplatte entlang der Längserstreckung des Pedalarms verstellbar einstellbar.

Der Erfindung liegt daher die Aufgabe zugrunde, eine Anordnung der oben genannten Art anzugeben, das besonders einfach herstellbar und montierbar und dessen Pedalarm mit besonders geringem Zeitaufwand relativ zu einem externen Anschlag, insbesondere Endanschlag, justierbar ist. Weiterhin soll ein Verfahren zur Teilmontage eines Pedals angegeben werden.

Diese Aufgabe wird erfindungsgemäß dadurch gelöst, dass die Pedalplatte zur Justage des Pedalanschlags relativ zu dem Endanschlag verschiebbar und über Befestigungsmittel befestigt an dem Pedalarm angeordnet ist.

Die Erfindung geht dabei von der Überlegung aus, dass ein Pedal, das einen besonders geringen Herstellungs- und Montageaufwand erfordert und dessen Pedalarm relativ einfach zu einem Endanschlag justierbar ist relativ zu dem Endanschlag justierbar sein sollte. Dann lässt sich das Pedal und der Endanschlag vormontieren, wobei bei der Endmontage lediglich eine Justage des Pedals relativ zu dem Endanschlag erforderlich wäre. Hierzu müsste das Pedal Elemente aufweisen, die zur Justage verschiebbar sind. Der Aufwand zur Justage des Pedals wäre dann besonders gering, wenn der für den externen Endanschlag vorgesehene Anschlag der Pedalplatte lediglich relativ zu dem Endanschlag justiert werden müsste. Um dabei gleichzeitig eine nahezu vollständige Vormontierbarkeit des Pedalarms zu gewährleisten, könnte der Anschlag der Pedalplatte verschiebbar an dem Pedalarm angeordnet sein. Besonders einfach ist eine Justage des Anschlags der Pedalplatte relativ zu dem Endanschlag, wenn der mit der Pedalplatte gekoppelte Anschlag über Befestigungsmittel verschiebbar an dem Pedalarm angeordnet ist.

Vorteilhafterweise umfassen die Befestigungsmittel eine Anzahl von Blattfedern. Mittels einer oder mehrerer Blattfedern lässt sich besonders einfach die Pedalplatte an dem Pedalarm befestigen.

Eine erste Blattfeder und eine zweite Blattfeder blockieren vorteilhafterweise das Verschieben des mit der Pedalplatte fest verbundenen Anschlags in eine erste Richtung. Eine dritte und eine vierte Blattfeder blockieren das Verschieben des mit der Pedalplatte fest verbundenen Anschlags dabei in eine zweite Richtung, wobei die zweite Richtung entgegengesetzt zur ersten Richtung verläuft. Durch die paarweise Anordnung von Blattfedern ist zuverlässig sichergestellt, dass auch bei einem Defekt einer einzelnen Blattfeder die Funktion der Blattfedern, die Pedalplatte an der Pedalstange zu halten, zuverlässig erfüllbar ist. Zudem lassen sich Blattfedern mit besonders geringem Platzbedarf ohne Beeinträchtigung der Funktion anordnen.

Vorteilhafterweise ist die Stellung des Pedalarms mittels einer Sensoreinheit erfassbar. Erfasst eine Sensoreinheit in einem vorgegebenen Bewegungsbereich des Pedalarms die Schwenkbewegung des Pedalarms, so lässt sich in Abhängigkeit von den von der Sensoreinheit erfassten Daten mittels einer elektronischen Steuereinheit ein das Kraftfahrzeug betreibender Verbrennungsmotor besonders fein ansteuern. Hierdurch ist eine besonders genaue Einstellung der Geschwindigkeit des Kraftfahrzeugs möglich.

Bezüglich des Verfahrens wird die Aufgabe erfindungsgemäß dadurch gelöst, dass zunächst der Pedalarm mittels eines Abstützelements in einer Endposition fixiert wird, dann der mit der Pedalplatte über Befestigungsmittel befestigte Pedalanschlag relativ zu einem zum Pedal externen, die Schwenkbarkeit des Pedalarms (14) begrenzenden Endanschlag justiert wird, wozu der fest mit der Pedalplatte verbundene Pedalanschlag entlang des Pedalarms in eine relativ zum Endanschlag justierte Endstellung verschoben wird.

Das Abstützelement erfüllt hierbei die Funktion, der Sensoreinheit einen festen, durch das Abstützelement definierten Endpunkt vorzugeben. Hierdurch weist die für das Pedal erforderliche Montagearbeit ein besonders geringes Maß auf. Diese einfache Montierbarkeit unterstützt dabei die auf dem Pedalarm verschiebbare Pedalplatte, die eine besonders einfache mechanische Justierbarkeit des Pedals sicherstellt.

Vorteilhafterweise sind zur Justage des mit der Pedalplatte gekoppelten Anschlags die Befestigungsmittel mittels einer Montagehilfe lösbar. Da die Blattfedern paarweise das Verschieben der Pedalplatte auf dem Pedalarm in eine Richtung blockieren, wobei die den jeweiligen Blattfedern paarweise zugeordneten Richtungen einander entgegengesetzt sind, ist es erforderlich, zumindest ein Paar Blattfedern bei der Montage zu entsperren. Dies ist mit besonders geringem Aufwand durch eine Montagehilfe möglich.

Vorteilhafterweise entsperrt die Montagehilfe die als erste und als zweite Blattfeder ausgebildeten Befestigungsmittel. Die erste und die zweite Blattfeder sind hierbei das Paar Blattfedern, das dem oberen Bereich der Pedalplatte zugewandt ist. Dann lässt sich durch Durchführungen, die in der Pedalplatte angeordnet sind, in besonders einfacher Weise eine Montagehilfe einführen, die zur Justage der Pedalplatte an dem Pedalarm das erste Paar Blattfedern, das die erste und die zweite Blattfeder umfasst, entsperrt.

Die mit der Erfindung erzielten Vorteile bestehen insbesondere darin, dass statt der Anpassung eines Endanschlags an die mechanische Bewegbarkeit des Pedalarms der an dem Pedalarm angeordnete und mit der Pedalplatte gekoppelte Anschlag relativ zu dem Endanschlag justiert wird. Dabei wird bei der Montage des Pedals einer dem Pedal zugehörigen Sensoreinheit ein fester Anfangs- und Endpunkt vorgegeben, wodurch der für das Pedal erforderlich Montageaufwand zusätzlich besonders gering ausfällt.

Ein Ausführungsbeispiel der Erfindung wird anhand einer Zeichnung näher erläutert. Darin zeigen die Figuren:
- Figur 1: schematisch ein Pedal und
- Figur 2: schematisch die auf dem Pedalarm zu justierende Pedalplatte.

Einander entsprechende Teile sind in allen Figuren mit den gleichen Bezugszeichen versehen.

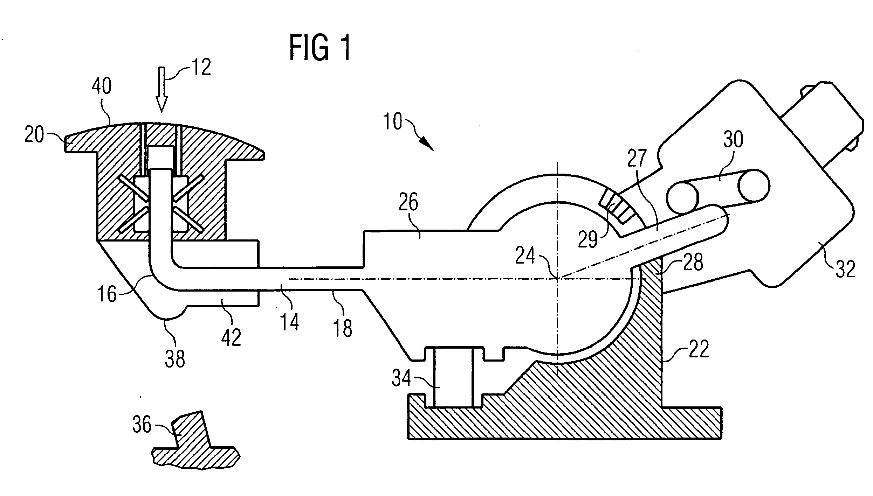

Das Pedal 10 gemäß Figur 1 ist als Fahrpedal eines Kraftfahrzeugs ausgebildet und durch eine Kraft 12, insbesondere eine Fußkraft, eines Fahrers zu betätigen. Mit der Betätigung des Pedals 10 steuert der Fahrer die Geschwindigkeit des Kraftfahrzeugs. Der Fahrer und das Kraftfahrzeug sind in der Zeichnung nicht näher dargestellt.

Das Pedal 10 umfasst einen Pedalarm 14 mit einem ersten Endbereich 16 und einem zweiten Endbereich 18. Der erste Endbereich 16 des Pedals 10 weist eine Pedalplatte 20 auf, die von der Kraft 12 des nicht näher dargestellten Fahrers des ebenfalls nicht näher dargestellten Kraftfahrzeugs betätigbar ist. Der zweite Endbereich 18 des Pedalarms 14 ist um eine in einem Gehäuse 22 gelagerte Schwenkachse 24 schwenkbar gelagert. Hierzu ist der zweite Endbereich 18 des Pedalarms 14 an einem die Schwenkachse 24 teilweise umschließenden Pedalkopf 26 angeordnet. Hierzu weist der Pedalkopf 26 ein in der Figur 1 nicht näher dargestelltes Gewinde auf, in das der zweite Endbereich 18 des Pedalarms 14 geschraubt ist. Zusätzlich ist der zweite Endbereich 18 des Pedalarms 14 fest mit dem Pedalkopf 26 verklebt.

Der Pedalkopf 26 weist einen Fortsatz 27 auf, der mit einem Hebel 30 einer Sensoreinheit mechanisch gekoppelt ist. Die Bewegung des Pedalarms 14 überträgt der Fortsatz 27 des Pedalkopfs 26 mechanisch auf den Hebel 30. Dabei ist die Bewegbarkeit des Fortsatzes 27 durch einen ersten Anschlag 28 und einen zweiten Anschlag 29 begrenzt. Durch den Fortsatz 27 des Pedalkopfs 26 des Pedalarms 14 erhält die Sensoreinheit 32 ein Signal, das die jeweils aktuelle Position des Pedalarms 14 widerspiegelt. Hierdurch ist die Bewegung des Pedalarms 14 von der Sensoreinheit 32 erfaßbar. Die Sensoreinheit 32 ist in nicht näher dargestellter Weise elektronisch an eine ebenfalls nicht näher dargestellte Steuereinheit gekoppelt, die wiederum elektronisch und/oder mechanisch an ein Leistungsstellglied des Kraftfahrzeugs, insbesondere einen Drosselklappenstutzen angeschlossen ist. Hierdurch ist mittels einer Auslenkung des Pedalarms 14 mittels einer Kraft 12, insbesondere einer Fußkraft, die Bewegung des Pedalarms 14 an die Sensoreinheit 32 übermittelbar. In Abhängigkeit des von der Sensoreinheit 32 empfangenen Signals ist dabei das Leistungsstellglied des Kraftfahrzeugs ansteuerbar. Hierdurch ist über eine Bewegung des Pedalarms 14 die Geschwindigkeit des Kraftfahrzeugs steuerbar.

Der Pedalarm 14 ist in seiner Ruhestellung oder Startposition dargestellt. Zum Bewegen des Pedalarms 14 drückt die Kraft 12 den Pedalarm gemäß Figur 1 nach unten. Der Pedalarm 14 ist über die Sensoreinheit 32 elektronisch an eine Steuereinheit gekoppelt. Dadurch fehlt dem Fahrer, der das Pedal 14 betätigt, die pedalwegabhängige Hysterese, die dem Fahrer beim Betätigen des Pedalarms 14 über die Pedalplatte 20 einen mit zunehmendem Herunterdrücken des Pedalarms ansteigenden Widerstand entgegensetzt. Um den Fahrer trotzdem das Gefühl einer pedalwegabhängigen mechanischen Hysterese zu vermitteln, ist der Pedalkopf 26 des Pedals 10 von einem Rückstellfederelement 34 in die Startposition beaufschlagt. Das Rückstellfederelement 34 setzt der Bewegung des Pedalarms 14 einen mit zunehmendem Herunterdrücken des Pedalarms 14 ansteigenden mechanischen Widerstand entgegen und überführt den Pedalarm 14 nach einem Loslassen der Kraft 12 wieder in seine Ausgangs- oder Startposition. Alternativ kann das Rückstellfederelement 34 auch an dem Pedalarm 14 mittelbar oder unmittelbar abgestützt sein.

Die Endposition des Pedalarms 14 ist durch einen außerhalb des Gehäuses 22 angeordneten Endanschlag 36 begrenzt. Der Pedalarm 14 ist über die Pedalplatte 20 mit dem Anschlag 36 in Kontakt zu bringen. Hierzu weist die Pedalplatte 20 einen Pedalanschlag 38 auf, der an der der Oberseite 40 der Pedalplatte 20 gegenüberliegenden Seite an der Pedalplatte 20 angeordnet ist. Der Pedalanschlag 38 befindet sich sozusagen an der Unterseite 42 der Pedalplatte 20.

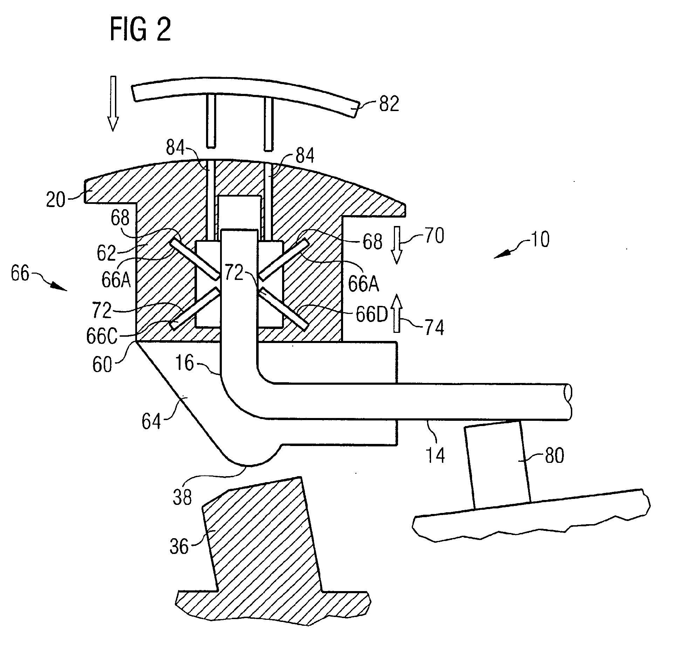

Beim Betrieb des Pedals 10 lenkt ein Fahrer mit einer Kraft 12, insbesondere Fußkraft, über die Pedalplatte den Pedalarm 14 des Pedals 10 in Abhängigkeit davon aus, wie schnell das Fahrzeug fahren soll. Dabei berührt bei durchgetretenem Pedalarm 14 der an der Pedalplatte 20 angeordnete Pedalanschlag 38 den externen Endanschlag 36. Hierzu wird bei der Montage des Pedals 10 nicht der Endanschlag 36 relativ zu dem Pedal, sondern der Pedalanschlag 38 der Pedalplatte 20 des Pedals 10 relativ zu dem Endanschlag 36 justiert. Zur Erläuterung der Justage des Pedalanschlags 38 relativ zu dem Endanschlag 36 ist die Pedalplatte 20 im Detail in Figur 2 gezeigt.

Gemäß Figur 2 umfaßt die Pedalplatte 20 ein Gehäuse 60, das den ersten Endbereich 16 des Pedalarms 14 umschließt. Das Gehäuse 60 der Pedalplatte 20 weist an der Unterseite des Pedalarms 14 den Pedalanschlag 38 auf. Der untere Bereich 64 des Gehäuses 60 der Pedalplatte 20 umfaßt den ersten Endbereich 16 des Pedalarms 14 in der Weise, daß der Pedalarm 14 in dem unteren Bereich 64 des Gehäuses 60 gemäß Figur 2 eine Auf- oder Abbewegung ausführen kann, jedoch nicht seitlich verschiebbar ist. Mit anderen Worten: Der Pedalarm 14 ist in dem unteren Bereich 64 des Gehäuses 60 nicht aus der Figur 2 heraus oder in die Figur 2 hinein verschiebbar.

In dem oberen Bereich 62 des Gehäuses 60 der Pedalplatte 20 sind als Blattfedern 66 ausgebildete Befestigungsmittel 66 angeordnet, über die die Pedalplatte 20 an dem Pedalarm 14 befestigt ist. Die Blattfedern 66 sind paarweise angeordnet. Das erste Paar 68 der Blattfedern 66 umfaßt eine erste Blattfeder 66A und eine zweite Blattfeder 66B. Das erste Paar 68 Blattfedern 66 blockiert eine Bewegung der Pedalplatte 20 in eine erste Richtung 70. Diese erste Richtung verläuft gemäß den Figuren 1 und 2 nach unten, gibt jedoch eine Bewegung der Pedalplatte 20 gemäß den Figuren 1 und 2 von unten nach oben frei. Das zweite Paar 72 der Blattfedern 66 umfaßt eine dritte Blattfeder 66C und eine vierte Blattfeder 66D. Im Gegensatz zu dem ersten Paar 68 der Blattfedern 66 blockiert das zweite Paar 72 der Blattfedern 66 eine Bewegung der Pedalplatte 20 an dem Pedalarm 14 in eine der ersten Richtung 70 entgegengesetzte zweite Richtung 74. Diese zweite Richtung 74 verläuft gemäß den Figuren 1 und 2 nach oben, gibt jedoch eine Bewegung der Pedalplatte 20 von oben nach unten frei.

Bei der Montage des Pedals 10 ist es in einem Teilschritt erforderlich, daß die Pedalplatte 20 mit ihrem Pedalanschlag 38 relativ zu dem außerhalb des Pedals 10 angeordneten Endanschlag 36 fixiert wird. Diese Teilmontage des Pedals 10 erfolgt in der Weise, daß zunächst der Pedalarm 14 mittels eines Abstützelements 80 in einer Endposition fixiert wird. Dann wird der mit der Pedalplatte 20 gekoppelte Pedalanschlag 38 relativ zu dem Endanschlag 36 justiert. Hierzu wird die Pedalplatte 20 entlang des Pedalarms 14 verschoben. Zum Verschieben der Pedalplatte 20 greift eine Monagehilfe 82 in Öffnungen 84 der Pedalplatte 20, um das erste Paar 68 Blattfedern 66 zu entriegeln. Mit der in der Pedalplatte 20 angeordneten Montagehilfe 82 wird dann die Pedalplatte 20 solange verschoben, bis sie den externen Endanschlag 36 berührt. Dann wird die Montagehilfe 82 aus der Pedalplatte 20 entfernt, wodurch wiederum die erste Blattfeder 66A und die zweite Blattfeder 66B eine Bewegung der Pedalplatte nach unten blockieren und wodurch die Pedalplatte 20 fest an dem Pedalarm 14 angeordnet ist. Anschließend wird das Abstützelement 80 entfernt und das Pedal ist zumindest in Bezug auf die Teilmontage bei er die Pedalplatte 20 relativ zu dem externen Entanschlag 36 justiert wird, einsatzbereit.

Durch die mechanische Vorgabe der Endposition des Pedalarms 14 bestimmt diese Position den größten Auslenkbereich des Pedalarms 14. Die Sensoreinheit 32 wird daher so eingestellt, daß diese Position der maximalen Auslenkung des Pedalarms 14 einer Endposition der Sensoreinheit 32 entspricht. Dabei wird üblicherweise der in dem Gehäuse 22 vorgesehene Anschlag 29 des Fortsatzes 27 des Pedalkopfs 26 nicht von dem Fortsatz 27 berührt.

Die Pedalplatte 20 des Pedalarms 14 läßt sich besonders einfach herstellen und montieren, wobei gleichzeitig eine besonders einfache Justage des mit der Pedalplatte 20 gekoppelten Pedalanschlags 38 relativ zu dem Endanschlag 36 zuverlässig gewährleistet ist. Das Prinzip einer auf einem Pedalarm verschiebbar angeordneten Pedalplatte 20 ist überall da einsetzbar, wo ein mit einer Pedalplatte 20 gekoppelter Pedalanschlag 38 relativ zu einem Endanschlag eingestellt werden soll.

## Patentansprüche

1. Anordnung mit einem Pedal (10), insbesondere für ein Kraftfahrzeug, und einem zum Pedal (10) externen, die Schwenkbarkeit des Pedalarms (14) begrenzenden Endanschlag (36) wobei das Pedal (10) einen Pedalarm (14) aufweist, welcher an seinem ersten Endbereich (16) von einer Kraft (12), insbesondere einer Fußkraft, auslenkbar und an seinem zweiten Endbereich (18) um eine Schwenkachse (24) schwenkbar gelagert ist, wobei an dem ersten Endbereich (16) des Pedalarms (14) eine mit einem Pedalanschlag (38) fest verbundene Pedalplatte (20) angeordnet ist, **dadurch gekennzeichnet, dass** die Pedalplatte (20) zur Justage des Pedalanschlags (38) relativ zu dem Endanschlag (36) verschiebbar und über Befestigungsmittel (66) befestigt an dem Pedalarm (14) angeordnet ist.

2. Anordnung nach Anspruch 1, **dadurch gekennzeichnet, dass** die Befestigungsmittel (66) eine Anzahl von Blattfedern (66) umfassen.

3. Anordnung nach Anspruch 2, **dadurch gekennzeichnet, dass** eine erste Blattfeder (66A) und eine zweite Blattfeder (66B) das Verschieben des mit der Pedalplatte (20) fest verbundenen Pedalanschlags (38) in eine erste Richtung (70) blockieren und eine dritte Blattfeder (66C) und eine vierte Blattfeder (66D) das Verschieben des mit der Pedalplatte (20) fest verbundenen Pedalanschlags (38) in eine zweite Richtung (74) blockieren, wobei die zweite Richtung (74) entgegengesetzt zur ersten Richtung (70) verläuft.

4. Anordnung nach einem der Ansprüche 1 bis 3, **dadurch gekennzeichnet, dass** die Stellung des Pedalarms (14) mittels einer Sensoreinheit (32) erfassbar ist.

5. Verfahren zur Teilmontage eines Pedals (10) einer Anordnung nach einem der Ansprüche 1 bis 4, **dadurch gekennzeichnet, dass** zunächst der Pedalarm (14) mittels eines Abstützelements (80) in einer Endposition fixiert wird, dann der mit der Pedalplatte (20) über Befestigungsmittel (66) befestigte Pedalanschlag (38) relativ zu einem zum Pedal (10) externen, die Schwenkbarkeit des Pedalarms (14) begrenzenden Endanschlag (36) justiert wird, wozu der fest mit der Pedalplatte (20) verbundene Pedalanschlag (38) entlang des Pedalarms (14) in eine relativ zum Endanschlag (36) justierte Endstellung verschoben wird.

6. Verfahren nach Anspruch 5, **dadurch gekennzeichnet, dass** zur Justage des mit der Pedalplatte (20) gekoppelten Pedalanschlags (38) die Befestigungsmittel (66) mittels einer Montagehilfe (82) lösbar sind.

7. Verfahren nach Anspruch 6, **dadurch gekennzeichnet, dass** die Montagehilfe (82) die als erste Blattfeder (66A) und als zweite Blattfeder (66B) ausgebildeten Befestigungsmittel (66) entsperrt.

## Claims

1. Arrangement with a pedal (10), especially for a motor vehicle, and a limit stop (36) external to the pedal (10) and limiting the capacity of the pedal arm (14) to pivot, the pedal (10) having a pedal arm (14), which at its first end (16) can be deflected by a force (12), in particular by the force of a foot, and at its second end (18) is supported so that it can pivot about a pivot axis (24), a pedal plate (20) firmly connected to the pedal stop (38) being arranged at the first end (16) of the pedal arm (14), **characterized in that** the pedal plate (20) is displaceable relative to the limit stop (36) for adjustment of the pedal stop (38) and is arranged fixed to the pedal arm (14) by fasteners (66).

2. Arrangement according to Claim 1, **characterized in that** the fasteners (66) comprise a number of leaf springs (66).

3. Arrangement according to Claim 2, **characterized in that** a first leaf spring (66A) and a second leaf spring (66B) block the displacement of the pedal stop (38) firmly connected to the pedal plate (20) in a first direction (70) and a third leaf spring (66C) and a fourth leaf spring (66D) block the displacement of the pedal stop (38) firmly connected to the pedal plate (20) in a second direction (74), the second direction (74) running counter to the first direction (70).

4. Arrangement according to one of Claims 1 to 3, **characterized in that** the position of the pedal arm (14) can be detected by means of a sensor unit (32).

5. Method for the partial assembly of a pedal (10) of an arrangement according to one of Claims 1 to 4, **characterized in that** the pedal arm (14) is first fixed in a limit position by means of a support element (80), and the pedal stop (38) fixed to the pedal plate (20) by fasteners (66) is then adjusted in relation to a limit stop (36) external to the pedal (10) and limiting the capacity of the pedal arm (14) to pivot, for which purpose the pedal stop (38) firmly connected to the pedal plate (20) is displaced along the pedal arm (14) into a limit position adjusted in relation to the limit stop (36).

6. Method according to Claim 5, **characterized in that** for adjustment of the pedal stop (38) coupled to the pedal plate (20), the fasteners (66) can be released by means of an assembly aid (82).

7. Method according to Claim 6, **characterized in that** the assembly aid (82) unlocks the fasteners (66) embodied as first leaf spring (66A) and as second leaf spring (66B).

## Revendications

1. Système comportant une pédale (10), notamment pour un véhicule automobile, et une butée de fin de course (36) externe à la pédale (10) limitant la possibilité de pivotement du bras de pédale (14), où la pédale (10) comporte un bras de pédale (14) qui peut dévier à sa première extrémité (16) sous l'effet d'une force (12), notamment d'une force appliquée au pied, et qui, à sa deuxième extrémité (18), est monté en pivotement autour d'un axe de pivotement (24), alors qu'un plateau de pédale (20) lié d'une façon fixe à une butée de pédale (38) est monté sur la première extrémité (16) du bras de pédale (14), **caractérisé par le fait que** le plateau de pédale (20) est, pour le réglage de la butée de la pédale (38) par rapport à la butée de fin de course (36), monté en translation sur le bras de pédale (14) et fixé au bras de pédale (14) par l'intermédiaire de moyens de fixation (66).

2. Système selon la revendication 1, **caractérisé par le fait que** les moyens de fixation (66) comprennent un certain nombre de ressorts à lame (66).

3. Système selon la revendication 2, **caractérisé par le fait qu'**un premier ressort à lame (66A) et un deuxième ressort à lame (66B) bloquent le déplacement dans une première direction (70) de la butée de pédale (38) liée d'une façon fixe au plateau de pédale (20) et qu'un troisième ressort à lame (66C) et un quatrième ressort à lame (66D) bloquent le déplacement dans une deuxième direction (74) de la butée de pédale (38) liée d'une façon fixe au plateau de pédale (20), la deuxième direction (74) étant opposée à la première direction (70).

4. Système selon l'une des revendications 1 à 3, **caractérisé par le fait que** la position du bras de pédale (14) peut être détectée au moyen d'une unité à capteur (32).

5. Procédé de montage préliminaire d'un système de pédale (10) conforme à l'une des revendications 1 à 4, **caractérisé par le fait que**, d'abord, le bras de pédale (14) est fixé dans une position de fin de course au moyen d'un organe d'appui (80), puis, la butée de pédale (38) fixée par l'intermédiaire de moyens de fixation (66) au plateau de pédale (20) est réglée par rapport à une butée de fin de course (36) externe à la pédale (10), laquelle butée limite la possibilité de pivotement du bras de pédale (14), en déplaçant, à cet effet, la butée de pédale (38) liée d'une façon fixe au plateau de pédale (20) le long du bras de pédale (14) dans une position de fin de course ajustée par rapport à la butée de fin de course (36).

6. Procédé selon la revendication 5, **caractérisé par le fait que**, pour le réglage de la butée de pédale (38) couplée au plateau de pédale (20), les moyens de fixation (66) peuvent être desserrés à l'aide d'un outil d'assistance au montage (82).

7. Procédé selon la revendication 6, **caractérisé par le fait que** l'outil d'assistance au montage (82) déverrouille les moyens de fixation (66) conçus sous la forme d'un premier ressort à lame (66A) et d'un deuxième ressort à lame (66B).
